# EUROPEAN PATENT SPECIFICATION

(11) **EP 3 463 878 B1**
(45) Date of publication and mention of the grant of the patent: **05.01.2022**
(21) Application number: 17727559.1
(22) Date of filing: 29.05.2017
(51) Int. Cl.: B32B 38/14, B32B 37/12, B60P 1/00, B60P 3/40, B65H 35/02, B65H 35/08, B26D 1/24, B41F 17/00, B32B 37/20

(54) **METHOD OF MANUFACTURING PRINTED LAMINATED FILMS, PARTICULARLY FOR PACKAGING**
VERFAHREN ZUR HERSTELLUNG VON BEDRUCKTEN LAMINIERTEN FOLIEN, INSBESONDERE FÜR VERPACKUNGSZWECKE
MÉTHODE DE FABRICATION DE FILMS STRATIFIÉS IMPRIMÉS, EN PARTICULIER POUR L'EMBALLAGE

(30) Priority: 31.05.2016 IT UB20163957
(43) Date of publication of application: 10.04.2019
(73) Proprietor: Uteco Converting S.p.A., 37030 Colognola Ai Colli (IT)
(72) Inventor: PERTILE, Agostino, 37036 SAN MARTINO BUON ALBERGO (IT); RESENTERA, Massimo, 37132 VERONA (IT); CATTARUZZA, Mauro, 36034 MALO (IT); RUSSO, Stefano, 38064 FOLGARIA (IT); CASELLI, Andrea, 15033 CASALE MONFERRATO (IT)
(74) Representative: Modiano, Micaela Nadia
(86) International application number: PCT/EP2017/062856
(87) International publication number: WO 2017/207468

(56) References cited:
- EP-A1- 2 781 353
- US-A1- 2009 311 454
- US-A1- 2011 226 108
- US-B1- 6 615 716

## Description

The present invention relates to a method of manufacturing printed laminated films, particularly for packaging.

As is known, in particular in the sector of food packaging, laminated films are widely used for packaging products.

Typically, a laminated film is made by gluing two or more films with different characteristics together. The film obtained will have the advantages of the individual films and will overcome the limitations of each one of the starting films.

In particular, there are many characteristics, functions and requirements that laminated films are called on to meet: mechanical rigidity, in order to adequately protect the content of the packaging; a barrier against gases and liquids; requirement to print on the packaging, for aesthetic reasons; requirement to seal the packaging and consequent requirement that the laminated films be heat-sealable; food compatibility; and more besides.

Currently, laminated films are made using a technological process that involves the following three steps: a step of printing a primary film; a step of laminating the primary film with a secondary film, after spreading a suitable adhesive, and winding the laminated film obtained; a step of cutting the laminated film longitudinally in order to obtain several strips, and the final winding of each one of these strips.

In particular, the printing step is carried out on the primary film generally with a flexographic printing machine, while the step of spreading the adhesive, which can be done indifferently on the printed primary film or on the secondary film, and the subsequent lamination of the films, is carried out on a laminating machine.

In this machine, a single spool of laminated film is obtained, starting from two individual spools, one of printed primary film and one of secondary film. The lamination can be of the solventless type, i.e. without solvents, or with water-based or solvent-based glues.

Once the lamination has been executed, the spool of printed laminated film has to remain "at rest" for a certain time, a non-negligible period with respect to the process times, for the purpose of allowing the polymerization of the adhesive and, therefore, ensuring a stable lamination between the two films. Indicatively, this time can be of the order of 48 hours or more.

When polymerization is complete, the spool of printed laminated film is positioned on a cutting machine, which is provided with cutting elements that make it possible to cut the printed laminated film longitudinally so as to reduce it to spools of narrower width than the starting spool, since, generally, the printed subject is reproduced multiple times along the transverse extension of the primary film that is output by the printing machine, for economic reasons.

In particular, the width of each one of these spools is equal to the width that will be needed for the packaging and, therefore, has a single printed subject plus optional borders for the sealing.

The production process described above exhibits some drawbacks.

Firstly, it requires the use of three separate machines, with corresponding staff, in order to arrive at the end product constituted by a single spool of printed laminated film.

Furthermore, in such production process there are numerous steps of the process that do not represent an added value, such as, for example, moving the spools from one machine to the other, or the separate start-up steps of the three machines.

Another drawback of the current process of producing printed laminated films is the time necessary for the polymerization of the adhesive, which is extremely long with respect to the actual machine times, with consequent inevitable lengthening of the overall time of the production process which obviously translates to an increase in costs.

The average time that elapses from printing the primary spool to outputting the single laminated spool from the cutter can reach 4 or 5 days.

A manufacturing of printed laminated films according to the background art is disclosed in US 2009/311454 A1, wherein several types of possible adhesives are mentioned and a curing by electron beam of the adhesive only is mentioned.

The aim of the present invention is to provide a solution to the above mentioned drawbacks, by devising a method of manufacturing printed laminated films, particularly for packaging products, that constitutes a valid alternative solution to the current processes of producing printed laminated films.

Within this aim, an object of the present invention is to provide a method of manufacturing printed laminated films, particularly for packaging products, that enables a considerable reduction of times and production costs with respect to the known art.

Another object, not within the scope of the invention as claimed, is to provide a machine for manufacturing printed laminated films that is structurally simple, extremely reliable and safe, and which is low cost.

This aim and these and other objects which will become better apparent hereinafter are achieved by a method of manufacturing printed laminated films, particularly for packaging of products, according to the invention, as defined in claim 1.

Further characteristics and advantages will become better apparent from the description of a preferred, but not exclusive, embodiment of the machine according to the invention, which is illustrated by way of nonlimiting example in the accompanying drawings wherein:

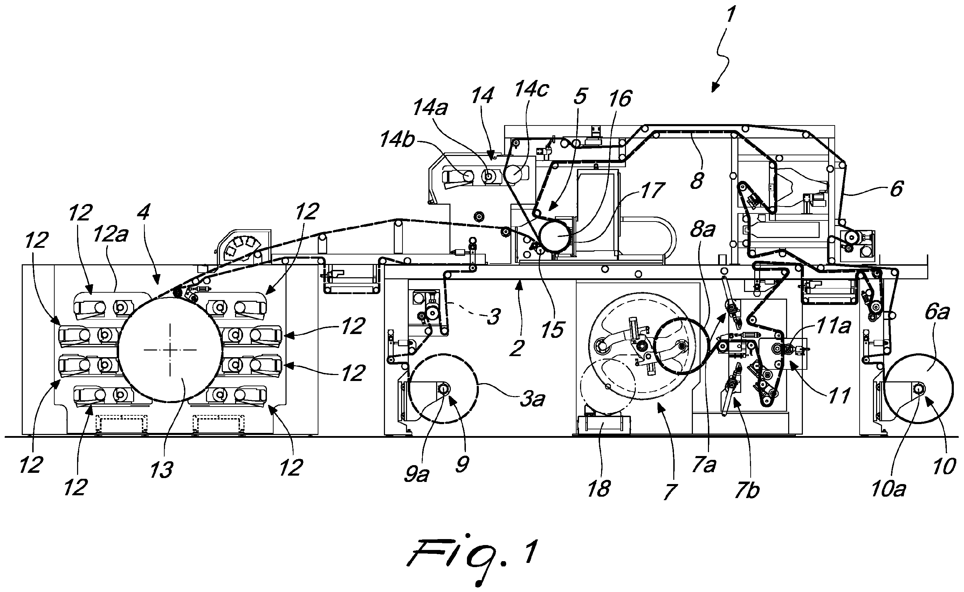

Figure 1 is a schematic side view of the machine, not within the scope of the invention as claimed.

With reference to the figure, the machine for manufacturing printed laminated films, particularly for packaging products, which is generally designated with the reference numeral 1, comprises a frame 2 that supports means of traction of at least one primary film 3 along an advancement path.

For example, such traction means can be provided by way of a plurality of conveyor rollers, mutually parallel and rotatably supported by the frame 2, and distributed along the advancement path of the primary film 3.

Means 4 of printing the primary film, which are supported by the frame 2, are interposed along the advancement path of the primary film.

According to the invention, on the frame 2 there are, in mutual succession, downstream of the printing means 4, along the advancement direction of the primary film 3, means 5 of laminating a secondary film 6 to the primary film 3 with the interposition of an adhesive material and means of electron beam polymerization of the adhesive material, which make it possible to achieve, rapidly, the hold of such adhesive material, thus rendering the lamination stable.

In particular, the adhesive material used is, advantageously, constituted by inks sensitive to electromagnetic radiation such as for example those sold by the companies Sun Chemical, Nicoat, Ashland, Daybreak and the like.

More specifically, it should be noted that the polymerization means are, advantageously, capable of ensuring the hold of the adhesive material just downstream of those means, so that at the output of the polymerization means the printed laminated film 8 can already be made available ready for subsequent processing, without requiring long waiting times.

In more detail, means 7 of winding the printed laminated film 8 are advantageously mounted on the frame 2, downstream of the polymerization means.

Conveniently, the frame 2 further supports a first unwinding device 9, on which at least one spool 3a of primary film 3 is mounted and which feeds the means of traction of the primary film 3. The first unwinding device 9 comprises, for example, a respective motorized support 9a of the spool 3a of primary film 3, rotatably mounted on the frame 2.

Advantageously, the frame 2 also supports a second unwinding device 10, on which at least one spool 6a of the secondary film 6 is mounted, and means of conveying the secondary film 6 from the second unwinding device 10 to the lamination means 5. In particular, the second unwinding device 10 comprises, in turn, a respective motorized support 10a of the spool 6a of secondary film, rotatably mounted on the frame 2.

Also on the frame 2 there are, advantageously, means 11 of cutting the printed laminated film 8, which are interposed between the lamination means 5 and the winding means 7.

In particular, the cutting means 11 are adapted to cut the printed laminated film 8 longitudinally so as to obtain multiple mutually parallel strips of the printed laminated film 8 and, conveniently, the winding means 7 are structured so as to be able to wind each one of the strips provided by the cutting means 11 in respective spools 8a.

More specifically, the cutting means 11 are constituted by a plurality of cutting units 11a, each one of which has, conveniently, a blade holder with a circular blade and a counterblade. The cutting units 11a advantageously can move on double-rail guides and are provided with motorized axles for actuating the blades and the counterblades and with an expandable shaft for moving the counterblades.

Delving deeper into the details of the different parts of the machine, the printing means 4 comprise, advantageously, at least one flexographic printing assembly 12.

More preferably, the printing means 4 comprise a plurality of flexographic printing assemblies 12 arranged around a drum 13 that is supported so that it can rotate by the frame 2 and is adapted to draw the primary film 3 through the printing units 12.

As is normal, each printing unit 12 is formed respectively by an anilox roller and by a plate roller, which are arranged parallel to the axis of the drum 13.

Advantageously, the lamination means 5 comprise, in mutual succession, an applicator assembly 14, the function of which is to apply, for example by spreading, an adhesive material on the secondary film 6, and a lamination device which is designed to execute the mutual lamination itself, with interposition of the adhesive material, between the primary film 3 and the secondary film 6.

The applicator assembly 14 is, for example, provided by an applicator roller 14a, which receives the material from a transfer roller 14b, connected to a tank of the adhesive material, and which is adapted to spread it on the secondary film 6 resting on a backpressure roller 14c. The applicator roller 14a and the transfer roller 14b can move on guides in order to allow the positioning of the applicator roller 14a in contact with the secondary film 6 and of the transfer roller 14b in contact with the applicator roller 14a.

It should be noted that, as an alternative, the applicator assembly 14 can also be constituted by the last printing unit encountered by the primary film 3 along its path in contact with the drum 13 and indicated in the figure with the reference numeral 12a, where, in this case, the corresponding plate and anilox rollers are substituted by, or in any case act as, respectively, applicator roller and transfer roller of the adhesive material.

Advantageously, the means of polymerization of the adhesive material are arranged immediately downstream of the lamination device.

More specifically, the lamination device comprises, for example, a lamination roller 15 and a backpressure roller 16, which are intended to engage, on mutually opposite sides, the primary film 3 and the secondary film 6.

The polymerization means comprise, advantageously, at least one unit 17 for emitting a beam of electrons which is, conveniently, capable of achieving both the polymerization of the inks applied by the printing means 4 onto the primary film 3 and the polymerization of the adhesive material interposed between the primary film 3 and the secondary film 6.

Preferably, the emission unit 17 is arranged so as to face to the portion of the backpressure roller 16 that is arranged downstream with respect to the position of the lamination roller 15, according to the advancement direction of the printed laminated film 8.

Advantageously, the winding means 7 comprise a winding assembly with chasing arms, which makes it possible to wind the strips of printed laminated film 8 originating from the cutting means 11 in respective spools 8a, conveniently of equal width and cut to the required outside diameter.

In particular, such winding assembly with chasing arms comprises, for example, a central structure constituted by two independent toothed bearings that rotate on the same horizontal axis and support a spool carrier pin, and by a front structure constituted by two arms that rotate on the aforementioned horizontal axis and which constitute, respectively, the front support of each spool carrier pin. Conveniently, the winding assembly with chasing arms comprises, further, two assemblies 7a and 7b for cutting the film transversely, an upper one and a lower one.

Conveniently, the winding assembly with chasing arms is provided with a suitable unloading device 18, which is capable of unloading the individual spools 8a in order to make them available for use. The unloading device 18 is, for example, provided by a spool carrier cradle, by a pneumatic ejector and by a system of moving the cradle.

For completeness it must be noted, further, that the frame 2 has a longitudinal extension and that the printing means 4 are, conveniently, arranged substantially at one longitudinal end of the frame 2, while the lamination means 5 and, conveniently, also the polymerization means are, advantageously, positioned in the upper part of the frame.

As can be seen in the figure, the winding means 7 are interposed on the frame 2 between the first and the second unwinding device 9 and 10.

Such arrangement makes it possible to keep the dimensions of the machine compact.

Operation of the machine according to the invention is the following.

The primary film 3 is unwound from the respective spool by the first unwinding device 9 and, drawn by the drum 13, passes through the printing units 12 until it reaches the lamination roller 15 where it is laminated to the secondary film 6, which originates from the respective spool 6a, unwound by the action of the second unwinding device 10, and on which the applicator assembly 14 has applied the adhesive material.

The printed laminated film 8 obtained as output from the lamination roller 15 passes through the emission unit 17 where it is struck by a beam of electrons which provide the hold of the adhesive material.

It should be noted that at the output of the emission unit 17, the hold of the adhesive material of the printed laminated film 8 will already be complete.

The printed laminated film 8 then arrives at the cutting means 11 which cut it longitudinally into strips that are wound in respective spools 8a by winding means 7.

In practice it has been found that the invention is capable of fully achieving the set aim and objects and, in particular, attention is drawn to the fact that the machine disclosed herein makes it possible to eliminate or at least reduce dead times, thus leading to a drastic reduction in delivery times of the end product, which can be obtained in a few hours instead of in 4 or 5 days, as in the known art.

Another advantage of the invention is that it enables the production of printed laminated film with the use of a single machine instead of three, with consequent economic saving in investment and cost saving of the staff involved in the production process itself.

Another advantage of the machine disclosed herein is that it has a reduced environmental impact, in that, by virtue of the use of electron beam (or EB) technology for the polymerization of inks and adhesive material, there are no problems of treatment with solvents, as in the known art, in which after-burners/distillers of the solvents are required.

It should also be added that by virtue of the use of the electron beam technology it is possible to obtain, with the machine disclosed herein, a better chromatic result of the printing.

It should further be noted that the machine disclosed herein can also be used, optionally, as a normal printing machine, for example flexographic, on a single film, again with drying of the inks by way of the EB emission unit.

Last but not least, an advantage of the invention is that it enables, by way of the use of electron beams, the sterilization, at least partial, of the printed laminated film.

All the characteristics of the invention, indicated above as advantageous, convenient or similar, may also be missing or be substituted by equivalent characteristics.

The individual characteristics set out in reference to general teachings or to specific embodiments may all be present in other embodiments or may substitute characteristics in such embodiments.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method of manufacturing printed laminated films, particularly for packaging, which comprises
providing a machine comprising a frame (2) that supports means of traction of at least one primary film (3) along an advancement path and means (4) of printing inks on said at least one primary film (3) which are interposed along said advancement path,
providing on said frame (2), in mutual succession, downstream of said printing means (4), along the advancement direction of said primary film (3), means (5) of laminating a secondary film (6) to said primary film (3) with the interposition of an adhesive material and means of electron beam polymerization of said adhesive material, said electron beam polymerization means comprising at least one unit (17) for emitting a beam of electrons,
moving said primary film (3) by said means of traction along said advancement path,
printing inks on said primary film (3) by said means (4) of printing inks,
laminating said secondary film (6) to said primary film (3) with the interposition of said adhesive material by said means (5) of laminating,
emitting said beam of electrons by said at least one unit (17) and polymerizing both said inks and said adhesive material.

2. The method according to claim 1, **characterized by** providing said frame to support, downstream of said lamination means (5), means (7) of winding the printed laminated film (8) obtained, and winding said printed laminated film (8) by said means (7) of winding.

3. The method according to claim 2, **characterized by** providing said frame to support a first unwinding device (9), which is connected to said traction means and on which at least one spool (3a) of said primary film (3) is mounted, and unwinding said primary film (3) from said spool (3a) by said unwinding device (9).

4. The method according to claim 3, **characterized by** providing said frame (2) to support a second unwinding device (10), on which at least one spool (6a) of said secondary film (6) is mounted, and by providing means of conveying said secondary film (6) from said second unwinding device (10) to said lamination means (5), and conveying said secondary film (6) from said second unwinding device (10) to said lamination means (5) by said means of conveying said secondary film (6).

5. The method according to claim 4, **characterized by** providing, on said frame (2), means (11) of cutting said printed laminated film (8), which are interposed between said lamination means (5) and said winding means (7), and cutting said printed laminated film (8) longitudinally into multiple mutually parallel strips by said means (11) of cutting, and winding said strips in respective spools (8a) by said winding means (7).

6. The method according to one or more of the preceding claims, **characterized by** providing said printing means (4) as at least one flexographic printing assembly (12).

7. The method according to claim 6, **characterized by** providing a plurality of said flexographic printing assemblies (12) arranged around a drum (13) that is supported rotatably by said frame and drawing said primary film (3) through said printing assemblies (12) by said drum (13).

8. The method according to one or more of the preceding claims, **characterized by** providing said lamination means (5) as, in mutual succession, an assembly (14) for applying the adhesive material to said secondary film (6) or to said primary film (3) and a lamination device adapted to laminate together, with the interposition of said adhesive material, said primary film (3) and said secondary film (6).

9. The method according to one or more of the preceding claims, **characterized by** providing said winding means (7) as a winding assembly with chasing arms.

10. The method according to one or more of the preceding claims, **characterized by** providing said frame having a longitudinal extension, and by providing said printing means (4) arranged substantially at a longitudinal end of said frame (2), and arranging said lamination means (5) in the upper part of said frame (2).

## Patentansprüche

1. Ein Verfahren zur Herstellung bedruckter laminierter Folien, insbesondere für Verpackungszwecke, das Folgendes umfasst:
das Bereitstellen einer Maschine, die einen Rahmen (2) umfasst, der Mittel zum Ziehen mindestens einer primären Folie (3) entlang einem Vorschubweg und Mittel (4) zum Aufdrucken von Tinten auf die mindestens eine primäre Folie (3) trägt, die entlang dem Vorschubweg angeordnet sind,
das Bereitstellen, auf dem Rahmen (2), hintereinander, stromabwärts von den Aufdruckmitteln (4), entlang der Vorschubrichtung der primären Folie (3), von Mitteln (5) zum Laminieren einer sekundären Folie (6) auf die primäre Folie (3) mit Anordnung eines klebenden Materials und von Mitteln zur Elektronenstrahlpolymerisation des klebenden Materials dazwischen; wobei die Mittel zur Elektronenstrahlpolymerisation mindestens eine Einheit (17) zum Aussenden eines Elektronenstrahls umfassen,
das Bewegen der primären Folie (3) entlang dem Vorschubweg mit Hilfe der Zugmittel,
das Aufdrucken von Tinten auf die primäre Folie (3) durch die Mittel (4) zum Aufdrucken von Tinten,
das Laminieren der sekundären Folie (6) auf die primäre Folie (3) mit Anordnung des klebenden Materials durch die Laminiermittel (5) dazwischen,
das Aussenden des Elektronenstrahls durch die mindestens eine Einheit (17) und das Polymerisieren sowohl der Tinten als auch des klebenden Materials.

2. Das Verfahren gemäß Anspruch 1, **gekennzeichnet durch** das Bereitstellen des Rahmens, um, stromabwärts von den Laminiermitteln (5), Mittel (7) zum Wickeln der hergestellten bedruckten laminierten Folie (8) und zum Wickeln der bedruckten laminierten Folie (8) durch die Mittel (7) zum Wickeln zu tragen.

3. Das Verfahren gemäß Anspruch 2, **gekennzeichnet durch** das Bereitstellen des Rahmens zum Tragen einer ersten Abwicklungsvorrichtung (9), die mit den Zugmitteln verbunden ist und auf der mindestens eine Spule (3a) der primären Folie (3) montiert ist; und durch das Abwickeln der primären Folie (3) von der Spule (3a) durch die Abwicklungsvorrichtung (9).

4. Das Verfahren gemäß Anspruch 3, **gekennzeichnet durch** die Bereitstellung des Rahmens (2) zum Tragen einer zweiten Abwicklungsvorrichtung (10), an der mindestens eine Spule (6a) der sekundären Folie (6) montiert ist, und durch die Bereitstellung von Mitteln zum Fördern der sekundären Folie (6) von der zweiten Abwicklungsvorrichtung (10) zu den Laminiermitteln (5) und durch das Fördern der sekundären Folie (6) von der zweiten Abwicklungsvorrichtung (10) zu den Laminiermitteln (5) durch die Mittel zum Fördern der sekundären Folie (6).

5. Das Verfahren gemäß Anspruch 4, **gekennzeichnet durch** die Bereitstellung, an dem Rahmen (2), von Mitteln (11) zum Schneiden der bedruckten laminierten Folie (8), die zwischen den Laminiermitteln (5) und den Wicklungsmitteln (7) angeordnet sind, und durch das Schneiden der bedruckten laminierten Folie (8) in Längsrichtung in mehrere zueinander parallele Streifen durch die Mittel (11) zum Schneiden, und durch das Aufwickeln der Streifen auf entsprechende Spulen (8a) durch die Wicklungsmittel (7).

6. Das Verfahren gemäß einem oder mehreren der obigen Ansprüche, **gekennzeichnet durch** das Bereitstellen der Aufdruckmittel (4) als mindestens ein Flexodruckaufbau (12).

7. Das Verfahren gemäß Anspruch 6, **gekennzeichnet durch** die Bereitstellung einer Vielzahl der Flexodruckaufbauten (12), angeordnet um eine Walze (13), die drehbar von dem Rahmen getragen ist, und durch das Ziehen der primären Folie (3) durch die Druckaufbauten (12) von der Walze (13).

8. Das Verfahren gemäß einem oder mehreren der obigen Ansprüche, **gekennzeichnet durch** das Bereitstellen der Laminiermittel (5) als, aufeinanderfolgend, einen Aufbau (14) zum Auftragen des klebenden Materials auf die sekundäre Folie (6) oder auf die primäre Folie (3) und eine Laminiervorrichtung, ausgebildet, um, mit Anordnung des klebenden Materials dazwischen, die primäre Folie (3) und die sekundäre Folie (6) zusammenzulaminieren.

9. Das Verfahren gemäß einem oder mehreren der obigen Ansprüche, **gekennzeichnet durch** das Bereitstellen der Wicklungsmittel (7) als Wicklungsaufbau mit Leitapparaten.

10. Das Verfahren gemäß einem oder mehreren der obigen Ansprüche, **gekennzeichnet durch** das Bereitstellen des Rahmens mit einer Längsausdehnung und durch das Bereitstellen der Aufdruckmittel (4), die im Wesentlichen an einem Längsende des Rahmens (2) angeordnet sind, und durch das Anordnen der Laminiermittel (5) im oberen Teil des Rahmens (2).

## Revendications

1. Procédé de fabrication de films stratifiés imprimés, en particulier pour l'emballage, qui comprend
la fourniture d'une machine comprenant un cadre (2) qui supporte des moyens de traction d'au moins un film principal (3) le long d'un trajet d'avancement et des moyens (4) d'impression d'encres sur ledit au moins un film principal (3) qui sont intercalés le long dudit trajet d'avancement,
la fourniture sur ledit cadre (2), successivement, en aval desdits moyens d'impression (4), le long de la direction d'avancement dudit film principal (3), de moyens (5) de stratification d'un film secondaire (6) sur ledit film principal (3) avec interposition d'un matériau adhésif et de moyens de polymérisation par faisceau d'électrons dudit matériau adhésif, lesdits moyens de polymérisation par faisceau d'électrons comprenant au moins une unité (17) pour émettre un faisceau d'électrons,
le déplacement dudit film principal (3) par lesdits moyens de traction le long dudit trajet d'avancement,
l'impression d'encres sur ledit film principal (3) par lesdits moyens (4) d'impression d'encres,
la stratification dudit film secondaire (6) sur ledit film principal (3) avec interposition dudit matériau adhésif par lesdits moyens (5) de stratification,
l'émission dudit faisceau d'électrons par ladite au moins une unité (17) et la polymérisation à la fois desdites encres et dudit matériau adhésif.

2. Procédé selon la revendication 1, **caractérisé par** la fourniture dudit cadre pour supporter, en aval desdits moyens (5) de stratification, des moyens (7) d'enroulement du film stratifié imprimé (8) obtenu, et l'enroulement dudit film stratifié imprimé (8) par lesdits moyens (7) d'enroulement.

3. Procédé selon la revendication 2, **caractérisé par** la fourniture dudit cadre pour supporter un premier dispositif de déroulement (9), qui est relié auxdits moyens de traction et sur lequel au moins une bobine (3a) dudit film principal (3) est montée, et le déroulement dudit film principal (3) de ladite bobine (3a) par ledit dispositif de déroulement (9).

4. Procédé selon la revendication 3, **caractérisé par** la fourniture dudit cadre (2) pour supporter un second dispositif de déroulement (10), sur lequel au moins une bobine (6a) dudit film secondaire (6) est montée, et par la fourniture de moyens pour transporter ledit film secondaire (6) dudit second dispositif de déroulement (10) auxdits moyens de stratification (5), et le transport dudit film secondaire (6) dudit second dispositif de déroulement (10) auxdits moyens de stratification (5) par lesdits moyens de transport dudit film secondaire (6).

5. Procédé selon la revendication 4, **caractérisé par** la fourniture, sur ledit cadre (2), de moyens (11) de découpe dudit film stratifié imprimé (8), qui sont intercalés entre lesdits moyens de stratification (5) et lesdits moyens d'enroulement (7), et la découpe dudit film stratifié imprimé (8) longitudinalement en de multiples bandes mutuellement parallèles par lesdits moyens (11) de découpe, et l'enroulement desdites bandes dans des bobines (8a) respectives par lesdits moyens d'enroulement (7).

6. Procédé selon une ou plusieurs des revendications précédentes, **caractérisé par** la fourniture desdits moyens d'impression (4) sous la forme d'au moins un ensemble d'impression flexographique (12).

7. Procédé selon la revendication 6, **caractérisé par** la fourniture d'une pluralité desdits ensembles d'impression flexographique (12) agencés autour d'un tambour (13) qui est supporté de manière rotative par ledit cadre et l'étirage dudit film principal (3) à travers lesdits ensembles d'impression (12) par ledit tambour (13).

8. Procédé selon une ou plusieurs des revendications précédentes, **caractérisé par** la fourniture desdits moyens de stratification (5) sous la forme, successivement, d'un ensemble (14) pour appliquer le matériau adhésif sur ledit film secondaire (6) ou sur ledit film principal (3) et d'un dispositif de stratification adapté pour stratifier ensemble, avec l'intercalation dudit matériau adhésif, dudit film principal (3) et dudit film secondaire (6).

9. Procédé selon une ou plusieurs des revendications précédentes, **caractérisé par** la fourniture desdits moyens d'enroulement (7) sous la forme d'un ensemble d'enroulement avec bras de calandrage.

10. Procédé selon une ou plusieurs des revendications précédentes, **caractérisé par** la fourniture dudit cadre ayant une extension longitudinale, et par la fourniture desdits moyens d'impression (4) agencés sensiblement à une extrémité longitudinale dudit cadre (2), et l'agencement desdits moyens de stratification (5) dans la partie supérieure dudit cadre (2).
